# EUROPEAN PATENT APPLICATION

(11) **EP 4 629 317 A1**
(43) Date of publication of application: **08.10.2025**
(21) Application number: 24813688.9
(22) Date of filing: 10.01.2024
(51) Int. Cl.: H01M 4/133, H01M 4/36, H01M 4/583, H01M 10/0525

(54) **NEGATIVE ELECTRODE SHEET, BATTERY, AND ELECTRICAL APPARATUS**

(30) Priority: 31.05.2023 CN 202310638513
(71) Applicant: Contemporary Amperex Technology Co., Limited, Ningde, Fujian 352100 (CN)
(72) Inventor: WANG, Xitong, Ningde, Fujian 352100 (CN)
(74) Representative: Kraus & Lederer PartGmbB
(86) International application number: PCT/CN2024/071661
(87) International publication number: WO 2024/244482

(57) **Abstract**

A negative electrode plate, a battery, and an electric apparatus are provided. The negative electrode plate includes: a current collector; and a negative electrode active material layer formed on the current collector; where the negative electrode active material layer includes at least two negative electrode active material layers from inside to outside; the negative electrode active material layer includes a negative electrode active material selected from natural graphite or artificial graphite; and the at least two negative electrode active material layers include at least one negative electrode active material layer containing natural graphite and at least one negative electrode active material layer containing artificial graphite. Since the negative electrode plate uses both natural graphite and artificial graphite, the negative electrode plate can achieve a good balance between maintaining high energy density and high fast-charging capability and controlling costs.

## Description

### CROSS-REFERENCE TO RELATED APPLICATIONS

This application claims priority to Chinese Patent Application No. 202310638513.4, filed on May 31, 2023 and entitled "NEGATIVE ELECTRODE PLATE AND LITHIUM-ION BATTERY", which is incorporated herein by reference in its entirety.

### TECHNICAL FIELD

The present disclosure relates to the field of lithium-ion battery technologies, and in particular, to a negative electrode plate, a battery, and an electric apparatus.

### BACKGROUND

Lithium-ion batteries are a new type of green power source, featuring advantages such as high energy, high battery voltage, wide operating temperature range, long storage life, and no memory effect. They have been widely used in military and civilian small appliances as well as pure electric and hybrid new energy vehicles.

In some cases, a negative electrode of a lithium-ion battery typically needs to use artificial graphite as an active material. This is because compared to natural graphite, artificial graphite has advantages such as more balanced performance, better cycling performance, and improved compatibility with an electrolyte, which is more conducive to achieving high energy density and high fast-charging capability. However, this inevitably leads to the defect of high cost.

Therefore, how to reduce the manufacturing cost of the negative electrode while maintaining high energy density and high fast-charging capability has become an urgent and important issue to be addressed.

### SUMMARY

The present disclosure is made in view of the above technical problems, with an aim to provide a negative electrode plate, where the negative electrode plate uses both artificial graphite and natural graphite as negative electrode active materials to achieve a good balance between maintaining high energy density and high fast-charging capability and controlling costs.

To this end, a first aspect of the present disclosure provides a negative electrode plate, including:
a current collector; and
a negative electrode active material layer formed on the current collector;
where the negative electrode active material layer includes at least two negative electrode active material layers from inside to outside; the negative electrode active material layer includes a negative electrode active material selected from natural graphite or artificial graphite; and the at least two negative electrode active material layers include at least one negative electrode active material layer containing natural graphite and at least one negative electrode active material layer containing artificial graphite.

The negative electrode active material layer formed on the current collector includes cases where the negative electrode active material layer is directly disposed on the current collector, as well as cases where the negative electrode active material layer is indirectly disposed on the current collector, for example, other layers are also disposed between the negative electrode active material layer and the current collector.

Introducing both natural graphite and artificial graphite into the negative electrode active material layer can guarantee the advantages of high energy density of artificial graphite and low cost of natural graphite, thereby achieving a balanced performance compromise.

In any embodiment, the negative electrode active material layer includes a first negative electrode active material layer and a second negative electrode active material layer from inside to outside, where a negative electrode active material in the first negative electrode active material layer includes natural graphite, and a negative electrode active material in the second negative electrode active material layer includes artificial graphite.

In any embodiment, the first negative electrode active material layer is provided with one or more blind holes, where an opening of the blind hole is located on an outer side of the first negative electrode active material layer, that is, the opening of the blind hole is provided on a side of the first negative electrode active material layer away from the current collector.

Providing the blind hole in the first negative electrode active material layer, the artificial graphite in the second negative electrode active material layer can penetrate into the first negative electrode active material layer, thereby forming efficient lithium intercalation channels and improving fast-charging capability.

In any embodiment, a depth of the blind holes is 1%-80% of a thickness of the first negative electrode active material layer, preferably 10%-70%, and exemplarily 20%-60%; and/or
a diameter of the blind hole is 20-300 µm, exemplarily 80-150 µm; and/or
a spacing between the blind holes is 100-1000 µm, exemplarily 400-500 µm; and/or
a porosity of the blind hole is 0.1%-10%, exemplarily 2%-4%.

In any embodiment, the blind holes are uniformly distributed.

In any embodiment, the thickness of the first negative electrode active material layer is 10-200 µm, exemplarily 50-100 µm.

In any embodiment, a thickness of the second negative electrode active material layer is 10-200 µm, exemplarily 50-100 µm.

In any embodiment, the thickness of the first negative electrode active material layer is greater than the thickness of the second negative electrode active material layer.

In any embodiment, a median particle size of natural graphite is 5-20 µm; and/or
a median particle size of artificial graphite is 5-20 µm.

In any embodiment, the negative electrode active material layer includes a first negative electrode active material layer, a second negative electrode active material layer, and a third negative electrode active material layer from inside to outside, where a negative electrode active material in the first negative electrode active material layer includes artificial graphite; a negative electrode active material in the second negative electrode active material layer includes natural graphite; and a negative electrode active material in the third negative electrode active material layer includes artificial graphite.

In any embodiment, a system composed of the first negative electrode active material layer and the second negative electrode active material layer is provided with one or more blind holes, where an opening of the blind hole is located on an outer side of the second negative electrode active material layer, that is, the opening of the blind hole is provided on a side of the second negative electrode active material layer away from the current collector.

Providing the blind hole in the system composed of the first negative electrode active material layer and the second negative electrode active material layer, artificial graphite in the third negative electrode active material layer can penetrate into the first negative electrode active material layer and the second negative electrode active material layer, thereby forming efficient lithium intercalation channels that connect an innermost layer and an outermost layer, improving fast-charging capability.

In any embodiment, a depth of the blind hole is 1%-80% of a sum of a thickness of the second negative electrode active material layer and a thickness of the first negative electrode active material layer, exemplarily 10%-70%, and exemplarily 30%-60%; and/or
a diameter of the blind hole is 20-500 µm, exemplarily 100-150 µm; and/or
a spacing between the blind holes is 100-1500 µm, exemplarily 400-500 µm; and/or
a porosity of the blind hole is 0.1%-10%, exemplarily 2%-4%.

In any embodiment, the blind holes are uniformly distributed.

In any embodiment, the thickness of the first negative electrode active material layer is 10-100 µm, exemplarily 60-100 µm.

In any embodiment, the thickness of the second negative electrode active material layer is 10-200 µm, exemplarily 60-100 µm.

In any embodiment, a thickness of the third negative electrode active material layer is 10-100 µm, exemplarily 20-40 µm.

In any embodiment, the thickness of the second negative electrode active material layer is greater than the thickness of the first negative electrode active material layer and/or the third negative electrode active material layer.

In any embodiment, a median particle size of artificial graphite in the negative electrode active material of the first negative electrode active material layer is 5-20 µm; and/or
a median particle size of natural graphite in the negative electrode active material of the second negative electrode active material layer is 5-20 µm; and/or
a median particle size of artificial graphite in the negative electrode active material of the third negative electrode active material layer is 5-20 µm.

A second aspect of the present disclosure provides a method for preparing a negative electrode plate, including:
applying at least two negative electrode slurries containing negative electrode active materials onto a current collector in a stacking manner and performing drying to obtain a negative electrode plate;
where the negative electrode active material is selected from natural graphite or artificial graphite, and the at least two negative electrode slurries containing negative electrode active materials include at least one negative electrode slurry containing natural graphite and at least one negative electrode slurry containing artificial graphite.

In any embodiment, the method includes:
applying a first negative electrode slurry containing a negative electrode active material onto a current collector and performing drying to form a first negative electrode active material layer, where the negative electrode active material includes natural graphite; and
applying a second negative electrode slurry containing a negative electrode active material onto the first negative electrode active material layer and performing drying to form a second negative electrode active material layer, where the negative electrode active material includes artificial graphite;
to obtain a negative electrode plate.

In any embodiment, the method includes:
applying a first negative electrode slurry containing a negative electrode active material and a chemical hole-forming agent onto a current collector, performing drying and forming holes to form a first negative electrode active material layer with one or more blind holes, where the negative electrode active material includes natural graphite, and an opening of the blind hole is located on an outer side of the first negative electrode active material layer; and
applying a second negative electrode slurry containing a negative electrode active material onto the first negative electrode active material layer and performing drying to form a second negative electrode active material layer, where the negative electrode active material includes artificial graphite;
to obtain a negative electrode plate.

In any embodiment, the method includes:
applying a first negative electrode slurry containing a negative electrode active material onto a current collector and performing drying to form a first negative electrode active material layer, where the negative electrode active material includes natural graphite;
performing physical hole formation on the first negative electrode active material layer to form a first negative electrode active material layer with one or more blind holes, where an opening of the blind hole is located on an outer side of the first negative electrode active material layer; and
applying a second negative electrode slurry containing a negative electrode active material onto the first negative electrode active material layer with one or more blind holes and performing drying to form a second negative electrode active material layer, where the negative electrode active material includes artificial graphite;
to obtain a negative electrode plate.

In any embodiment, a depth of the blind hole is 1%-80% of a thickness of the first negative electrode active material layer, exemplarily 10%-70%, and exemplarily 20%-60%; and/or
a diameter of the blind hole is 20-300 µm, exemplarily 80-150 µm; and/or
a spacing between the blind holes is 100-1000 µm, exemplarily 400-500 µm; and/or
a porosity of the blind hole is 0.1%-10%, exemplarily 2%-4%.

In any embodiment, the blind holes are uniformly distributed.

In any embodiment, the thickness of the first negative electrode active material layer is 10-200 µm, exemplarily 50-100 µm.

In any embodiment, a thickness of the second negative electrode active material layer is 10-200 µm, exemplarily 50-100 µm.

In any embodiment, a median particle size of natural graphite is 5-20 µm; and/or
a median particle size of artificial graphite is 5-20 µm.

In any embodiment, the method includes:
applying a first negative electrode slurry containing a negative electrode active material onto a current collector and performing drying to form a first negative electrode active material layer, where the negative electrode active material includes artificial graphite;
applying a second negative electrode slurry containing a negative electrode active material onto the first negative electrode active material layer and performing drying to form a second negative electrode active material layer, where the negative electrode active material includes natural graphite; and
applying a third negative electrode slurry containing a negative electrode active material onto the second negative electrode active material layer and performing drying to form a third negative electrode active material layer, where the negative electrode active material includes artificial graphite;
to obtain a negative electrode plate.

In any embodiment, the method includes:
applying a first negative electrode slurry containing a negative electrode active material and a chemical hole-forming agent onto a current collector and performing semi-drying at a low temperature to form a semi-dried first negative electrode active material layer, where the negative electrode active material includes artificial graphite;
applying a second negative electrode slurry containing a negative electrode active material onto the semi-dried first negative electrode active material layer, performing drying at a high temperature, and performing hole formation to form a second negative electrode active material layer and form one or more blind holes in a system composed of the first negative electrode active material layer and the second negative electrode active material layer, where the negative electrode active material includes natural graphite, and an opening of the blind hole is located on an outer side of the second negative electrode active material layer; and
applying a third negative electrode slurry containing a negative electrode active material onto the second negative electrode active material layer and performing drying to form a third negative electrode active material layer, where the negative electrode active material includes artificial graphite;
to obtain a negative electrode plate.

In any embodiment, the method includes:
applying a first negative electrode slurry containing a negative electrode active material onto a current collector and performing drying to form a first negative electrode active material layer, where the negative electrode active material includes artificial graphite;
applying a second negative electrode slurry containing a negative electrode active material onto the first negative electrode active material layer and performing drying to form a second negative electrode active material layer, where the negative electrode active material includes natural graphite;
performing physical hole formation on a system composed of the first negative electrode active material layer and the second negative electrode active material layer to form one or more blind holes, where an opening of the blind hole is located on an outer side of the second negative electrode active material layer; and
applying a third negative electrode slurry containing a negative electrode active material onto the second negative electrode active material layer and performing drying to form a third negative electrode active material layer, where the negative electrode active material includes artificial graphite;
to obtain a negative electrode plate.

In any embodiment, a depth of the blind hole is 1%-80% of a thickness of the second negative electrode active material layer and a thickness of the first negative electrode active material layer, exemplarily 10%-70%, and exemplarily 30%-60%; and/or
a diameter of the blind hole is 20-500 µm, exemplarily 100-150 µm; and/or
a spacing between the blind holes is 100-1500 µm, exemplarily 400-500 µm; and/or
a porosity of the blind hole is 0.1%-10%, exemplarily 2%-4%.

In any embodiment, the blind holes are uniformly distributed.

In any embodiment, the thickness of the first negative electrode active material layer is 10-100 µm, exemplarily 60-100 µm.

In any embodiment, the thickness of the second negative electrode active material layer is 10-200 µm, exemplarily 60-100 µm.

In any embodiment, a thickness of the third negative electrode active material layer is 10-100 µm, exemplarily 20-40 µm.

In any embodiment, a median particle size of artificial graphite in the negative electrode active material of the first negative electrode active material layer is 5-20 µm; and/or
a median particle size of natural graphite in the negative electrode active material of the second negative electrode active material layer is 5-20 µm; and/or
a median particle size of artificial graphite in the negative electrode active material of the third negative electrode active material layer is 5-20 µm.

A third aspect of the present disclosure provides a lithium-ion battery including the negative electrode plate according to the above first aspect or a negative electrode plate prepared by the method according to the above second aspect. Typically, the lithium-ion battery in the present disclosure includes a battery cell, a battery module, a battery pack, and the like.

### BRIEF DESCRIPTION OF DRAWINGS

In the accompanying drawings, unless otherwise specified, same reference signs throughout a plurality of accompanying drawings indicate the same or similar components or elements. These accompanying drawings may not necessarily be drawn to scale. It should be understood that these accompanying drawings illustrate only some embodiments disclosed in this application and should not be construed as limitations on the scope of this application. To describe the technical solutions in the embodiments of this application more clearly, the following briefly describes the accompanying drawings required for describing the embodiments of this application. Apparently, the accompanying drawings in the following descriptions show merely some embodiments of this application, and persons of ordinary skill in the art may still derive other drawings from the accompanying drawings without creative efforts.

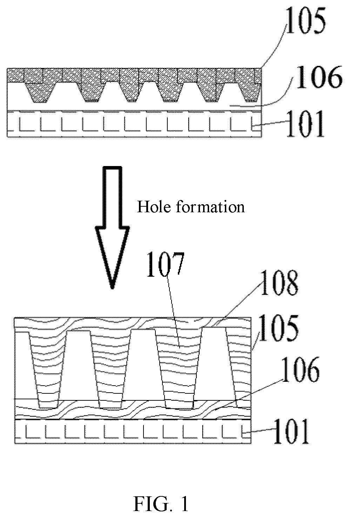

FIG. 1 is a schematic diagram of hole formation in a method of Example 1 of the present disclosure, where the meanings of the reference numerals are as follows: 101. current collector; 105. second negative electrode active material layer; 106. first negative electrode active material layer; 107. blind hole; and 108. third negative electrode active material.

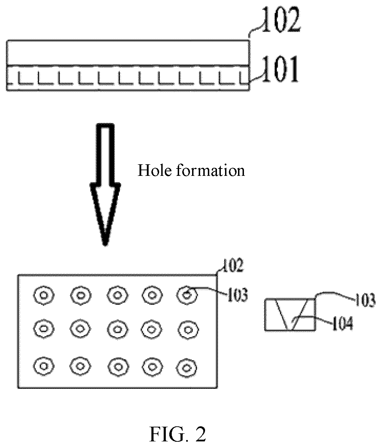

FIG. 2 is a schematic diagram of hole formation in a method of Example 4 of the present disclosure, where the meanings of the reference numerals are as follows: 101. current collector; 102. first negative electrode active material layer; 103. blind hole; and 104. blind hole channel.

### DESCRIPTION OF EMBODIMENTS

The following describes in detail the embodiments of a negative electrode plate and a preparation method thereof, and a lithium-ion battery including the negative electrode plate of the present disclosure with appropriate reference to the accompanying drawings. However, there may be cases where unnecessary detailed descriptions are omitted. For example, there may be cases where detailed descriptions of well-known matters or repetitive descriptions of substantially identical structures are omitted. This is to prevent the following description from becoming unnecessarily lengthy and to facilitate understanding by persons skilled in the art. In addition, the accompanying drawings and the following description are provided to enable persons skilled in the art to fully understand the present disclosure and are not intended to limit the subject matter recited in the claims.

"Ranges" disclosed in the present disclosure are defined in the form of lower and upper limits. A given range is defined by one lower limit and one upper limit selected, where the selected lower and upper limits define boundaries of that particular range. Ranges defined in this way may or may not include end values, and any combination may be used, meaning that any lower limit may be combined with any upper limit to form a range. For example, if ranges of 60-120 and 80-110 are provided for a specific parameter, it is understood that ranges of 60-110 and 80-120 can also be envisioned. In addition, if minimum values of a range are given as 1 and 2, and maximum values of the range are given as 3, 4, and 5, the following ranges can all be envisioned: 1-3, 1-4, 1-5, 2-3, 2-4, and 2-5. In the present disclosure, unless otherwise specified, a value range of "a-b" is a short representation of any combination of real numbers between a and b, where both a and b are real numbers. For example, a value range of "0-5" means that all real numbers in the range of "0-5" are listed herein, and "0-5" is just an abbreviated representation of a combination of these numbers. In addition, a parameter expressed as an integer greater than or equal to 2 is equivalent to disclosure that the parameter is, for example, an integer among 2, 3, 4, 5, 6, 7, 8, 9, 10, 11, 12, and so on.

Unless otherwise specified, all embodiments and optional embodiments of the present disclosure may be combined with each other to form new technical solutions.

Unless otherwise specified, all the steps in the present disclosure can be performed in the order described or in random order, for example, in the order described. For example, a method including steps (a) and (b) indicates that the method may include steps (a) and (b) performed in order or may include steps (b) and (a) performed in order. For example, the foregoing method may further include step (c), which indicates that step (c) may be added to the method in any ordinal position, for example, the method may include steps (a), (b), and (c), steps (a), (c), and (b), steps (c), (a), and (b), or the like.

Unless otherwise specified, the terms "comprise", "include", "have", "contain", or any other variations thereof mentioned in the present disclosure are intended to cover non-exclusive inclusion.

Unless otherwise specified, in the present disclosure, the term "or" is inclusive. For example, the phrase "A or B" means "A, B, or both A and B." More specifically, any one of the following conditions satisfies the condition "A or B": A is true (or present) and B is false (or not present); A is false (or not present) and B is true (or present); or both A and B are true (or present).

Unless otherwise specified, the indefinite articles "a" and "an" before an element or component in the present disclosure impose no limitation on the quantity requirement (that is, the number of occurrences) of the element or component. Therefore, "a" or "an" should be interpreted as including one or at least one, and an element or component in singular form also includes plural form unless the quantity is clearly intended to be limited to the singular form.

In some exemplary embodiments, a large number of expressions will be mentioned in the following description, and these expressions are defined as having the following meanings.

The term "negative electrode plate" refers to an electrode plate in a battery that has a lower potential and undergoes an oxidation reaction.

The term "current collector" refers to any conductive substrate capable of conducting current to an electrode during the discharge or charge of a lithium-ion battery.

The term "negative electrode active material" refers to an active material capable of intercalating (also referred to as "doping") lithium.

The term "natural graphite" refers to graphite naturally formed in nature.

The term "artificial graphite" refers to graphite prepared or processed synthetically.

The term "from inside to outside" refers to extending outward with a current collector as an inner layer.

The term "blind hole" refers to a via hole that connects a surface layer and an inner layer without penetrating an entire layer.

The term "system composed of a first negative electrode active material layer and a second negative electrode active material layer" refers to considering the first negative electrode active material layer and the second negative electrode active material layer as a single integral layer.

The term "porosity" refers to a ratio of a total volume of blind holes to a volume of a negative electrode active material layer.

The term "lithium-ion battery" refers to a rechargeable battery in which lithium ions move from an anode to a cathode during discharge and from the cathode to the anode during charging.

The term "median particle size" refers to D50, that is, a particle size corresponding to a cumulative particle size distribution percentage of 50%. The median particle size in the present disclosure is determined using a particle size analyzer-laser diffraction method, specifically, reference can be made to the standard GB/T19077-2016.

### Negative electrode plate

To at least partially address one or more of the above problems and other potential problems, a first exemplary embodiment of the present disclosure provides a negative electrode plate, including:
a current collector; and
a negative electrode active material layer formed on the current collector;
where the negative electrode active material layer includes at least two negative electrode active material layers from inside to outside; the negative electrode active material layer includes a negative electrode active material selected from natural graphite or artificial graphite; and the at least two negative electrode active material layers include at least one negative electrode active material layer containing natural graphite and at least one negative electrode active material layer containing artificial graphite.

In some embodiments, the negative electrode active material layer includes a first negative electrode active material layer and a second negative electrode active material layer from inside to outside, where a negative electrode active material in the first negative electrode active material layer includes natural graphite, and a negative electrode active material in the second negative electrode active material layer includes artificial graphite.

In some embodiments, the first negative electrode active material layer is provided with one or more blind holes, where an opening of the blind hole is located on an outer side of the first negative electrode active material layer.

In some embodiments, a depth of the blind hole is 1%-80% or 10%-70% or 20%-60% of a thickness of the first negative electrode active material layer, for example, it may specifically be 1%, 2%, 3%, 4%, 5%, 6%, 7%, 8%, 9%, 10%, 11%, 12%, 13%, 14%, 15%, 16%, 17%, 18%, 19%, 20%, 21%, 22%, 23%, 24%, 25%, 26%, 27%, 28%, 29%, 30%, 31%, 32%, 33%, 34%, 35%, 36%, 37%, 38%, 39%, 40%, 41%, 42%, 43%, 44%, 45%, 46%, 47%, 48%, 49%, 50%, 51%, 52%, 53%, 54%, 55%, 56%, 57%, 58%, 59%, 60%, 61%, 62%, 63%, 64%, 65%, 66%, 67%, 68%, 69%, 70%, 71%, 72%, 73%, 74%, 75%, 76%, 77%, 78%, 79%, 80%, or any value therebetween; and/or
a diameter of the blind hole is 20-300 µm or 80-150 µm, for example, it may be 20 µm, 30 µm, 40 µm, 50 µm, 60 µm, 70 µm, 80 µm, 90 µm, 100 µm, 110 µm, 120 µm, 130 µm, 140 µm, 150 µm, 160 µm, 170 µm, 180 µm, 190 µm, 200 µm, 210 µm, 220 µm, 230 µm, 240 µm, 250 µm, 260 µm, 270 µm, 280 µm, 290 µm, 300 µm, or any value therebetween; and/or
a spacing between the blind holes is 100-1000 µm or 400-500 µm, for example, it may be 100 µm, 110 µm, 120 µm, 130 µm, 140 µm, 150 µm, 160 µm, 170 µm, 180 µm, 190 µm, 200 µm, 210 µm, 220 µm, 230 µm, 240 µm, 250 µm, 260 µm, 270 µm, 280 µm, 290 µm, 300 µm, 310 µm, 320 µm, 330 µm, 340 µm, 350 µm, 360 µm, 370 µm, 380 µm, 390 µm, 400 µm, 410 µm, 420 µm, 430 µm, 440 µm, 450 µm, 460 µm, 470 µm, 480 µm, 490 µm, 500 µm, 510 µm, 520 µm, 530 µm, 540 µm, 550 µm, 560 µm, 570 µm, 580 µm, 590 µm, 600 µm, 610 µm, 620 µm, 630 µm, 640 µm, 650 µm, 660 µm, 670 µm, 680 µm, 690 µm, 700 µm, 710 µm, 720 µm, 730 µm, 740 µm, 750 µm, 760 µm, 770 µm, 780 µm, 790 µm, 800 µm, 810 µm, 820 µm, 830 µm, 840 µm, 850 µm, 860 µm, 870 µm, 880 µm, 890 µm, 900 µm, 910 µm, 920 µm, 930 µm, 940 µm, 950 µm, 960 µm, 970 µm, 980 µm, 990 µm, 1000 µm, or any value therebetween; and/or
a porosity of the blind hole is 0.1%-10% or 2%-4%, for example, it may be 0.1%, 1%, 2%, 3%, 4%, 5%, 6%, 7%, 8%, 9%, 10%, or any value therebetween.

In some embodiments, the blind holes are uniformly distributed.

Regarding a thickness of the first negative electrode active material layer, there is no particular limitation, and those commonly used in the art may be adopted. Typically, the thickness of the first negative electrode active material layer is 10-200 µm or 50-100 µm, for example, it may be 10 µm, 20 µm, 30 µm, 40 µm, 50 µm, 60 µm, 70 µm, 80 µm, 90 µm, 100 µm, 110 µm, 120 µm, 130 µm, 140 µm, 150 µm, 160 µm, 170 µm, 180 µm, 190 µm, 200 µm, or any value therebetween.

Regarding a thickness of the second negative electrode active material layer, there is no particular limitation, and those commonly used in the art may be adopted. Typically, the thickness of the second negative electrode active material layer is 10-200 µm or 50-100 µm, for example, it may be 10 µm, 20 µm, 30 µm, 40 µm, 50 µm, 60 µm, 70 µm, 80 µm, 90 µm, 100 µm, 110 µm, 120 µm, 130 µm, 140 µm, 150 µm, 160 µm, 170 µm, 180 µm, 190 µm, 200 µm, or any value therebetween.

Exemplarily, the thickness of the first negative electrode active material layer is greater than the thickness of the second negative electrode active material layer. Such an arrangement can better reduce costs.

Regarding a particle size of natural graphite, there is no particular limitation, and those commonly used in the art may be adopted. Typically, a median particle size of natural graphite is 5-20 µm, for example, it may be 5 µm, 6 µm, 7 µm, 8 µm, 9 µm, 10 µm, 11 µm, 12 µm, 13 µm, 14 µm, 15 µm, 16 µm, 17 µm, 18 µm, 19 µm, 20 µm, or any value therebetween.

Regarding a particle size of artificial graphite, there is no particular limitation, and those commonly used in the art may be adopted. Typically, a median particle size of artificial graphite is 5-20 µm, for example, it may be 5 µm, 6 µm, 7 µm, 8 µm, 9 µm, 10 µm, 11 µm, 12 µm, 13 µm, 14 µm, 15 µm, 16 µm, 17 µm, 18 µm, 19 µm, 20 µm, or any value therebetween.

Regarding the composition of the first negative electrode active material layer and the second negative electrode active material layer, there is no particular limitation, and those commonly used in the art may be adopted. Typically, the first negative electrode active material layer and the second negative electrode active material layer each include:
90-97wt% of a negative electrode active material, where for example, the weight percentage of the negative electrode active material may be 90wt%, 91wt%, 92wt%, 93wt%, 94wt%, 95wt%, 96wt%, 97wt%, or any value therebetween;
1-5wt% of a negative electrode conductive agent, where for example, the weight percentage of the negative electrode conductive agent may be 1wt%, 2wt%, 3wt%, 4wt%, 5wt%, or any value therebetween;
1-5wt% of a negative electrode binder, where for example, the weight percentage of the negative electrode binder may be 1wt%, 2wt%, 3wt%, 4wt%, 5wt%, or any value therebetween; and
1-3wt% of a negative electrode thickener, where for example, the weight percentage of the negative electrode thickener may be 1wt%, 2wt%, 3wt%, or any value therebetween; and
where the above weight percentages are measured based on a total weight of the negative electrode active material, the negative electrode conductive agent, the negative electrode binder, and the negative electrode thickener.

Regarding the negative electrode active material, the negative electrode active material is selected from natural graphite or artificial graphite.

Regarding the negative electrode conductive agent, there is no particular limitation, and those commonly used in the art may be adopted. Typically, the negative electrode conductive agent is selected from one or more of the following group: conductive carbon black, carbon nanotubes, vapor-grown carbon fiber, Ketjen black, and graphene.

Regarding the negative electrode binder, there is no particular limitation, and those commonly used in the art may be adopted. Typically, the negative electrode binder is styrene-butadiene rubber and/or lithium polyacrylate.

Regarding the negative electrode thickener, there is no particular limitation, and those commonly used in the art may be adopted. Typically, the negative electrode thickener is selected from one or more of the following group: sodium carboxymethyl cellulose, polyvinylidene fluoride, lithium polyacrylate, and polyacrylonitrile.

In some embodiments, the negative electrode active material layer includes a first negative electrode active material layer, a second negative electrode active material layer, and a third negative electrode active material layer from inside to outside, where a negative electrode active material in the first negative electrode active material layer includes artificial graphite; a negative electrode active material in the second negative electrode active material layer includes natural graphite; and a negative electrode active material in the third negative electrode active material layer includes artificial graphite.

In some embodiments, a system composed of the first negative electrode active material layer and the second negative electrode active material layer is provided with one or more blind holes, where an opening of the blind hole is located on an outer side of the second negative electrode active material layer.

In some embodiments, a depth of the blind hole is 1%-80% or 10%-70% or 30%-60% of a sum of a thickness of the second negative electrode active material layer and a thickness of the first negative electrode active material layer, for example, it may be 1%, 2%, 3%, 4%, 5%, 6%, 7%, 8%, 9%, 10%, 11%, 12%, 13%, 14%, 15%, 16%, 17%, 18%, 19%, 20%, 21%, 22%, 23%, 24%, 25%, 26%, 27%, 28%, 29%, 30%, 31%, 32%, 33%, 34%, 35%, 36%, 37%, 38%, 39%, 40%, 41%, 42%, 43%, 44%, 45%, 46%, 47%, 48%, 49%, 50%, 51%, 52%, 53%, 54%, 55%, 56%, 57%, 58%, 59%, 60%, 61%, 62%, 63%, 64%, 65%, 66%, 67%, 68%, 69%, 70%, 71%, 72%, 73%, 74%, 75%, 76%, 77%, 78%, 79%, 80%, or any value therebetween; and/or
a diameter of the blind hole is 20-500 µm or 100-150 µm, for example, it may be 20 µm, 30 µm, 40 µm, 50 µm, 60 µm, 70 µm, 80 µm, 90 µm, 100 µm, 110 µm, 120 µm, 130 µm, 140 µm, 150 µm, 160 µm, 170 µm, 180 µm, 190 µm, 200 µm, 210 µm, 220 µm, 230 µm, 240 µm, 250 µm, 260 µm, 270 µm, 280 µm, 290 µm, 300 µm, 310 µm, 320 µm, 330 µm, 340 µm, 350 µm, 360 µm, 370 µm, 380 µm, 390 µm, 400 µm, 410 µm, 420 µm, 430 µm, 440 µm, 450 µm, 460 µm, 470 µm, 480 µm, 490 µm, 500 µm, or any value therebetween; and/or
a spacing between the blind holes is 100-1500 µm, exemplarily 400-500 µm, for example, it may be 100 µm, 110 µm, 120 µm, 130 µm, 140 µm, 150 µm, 160 µm, 170 µm, 180 µm, 190 µm, 200 µm, 210 µm, 220 µm, 230 µm, 240 µm, 250 µm, 260 µm, 270 µm, 280 µm, 290 µm, 300 µm, 310 µm, 320 µm, 330 µm, 340 µm, 350 µm, 360 µm, 370 µm, 380 µm, 390 µm, 400 µm, 410 µm, 420 µm, 430 µm, 440 µm, 450 µm, 460 µm, 470 µm, 480 µm, 490 µm, 500 µm, 510 µm, 520 µm, 530 µm, 540 µm, 550 µm, 560 µm, 570 µm, 580 µm, 590 µm, 600 µm, 610 µm, 620 µm, 630 µm, 640 µm, 650 µm, 660 µm, 670 µm, 680 µm, 690 µm, 700 µm, 710 µm, 720 µm, 730 µm, 740 µm, 750 µm, 760 µm, 770 µm, 780 µm, 790 µm, 800 µm, 810 µm, 820 µm, 830 µm, 840 µm, 850 µm, 860 µm, 870 µm, 880 µm, 890 µm, 900 µm, 910 µm, 920 µm, 930 µm, 940 µm, 950 µm, 960 µm, 970 µm, 980 µm, 990 µm, 1000 µm, 1100 µm, 1200 µm, 1300 µm, 1400 µm, 1500 µm, or any value therebetween; and/or
a porosity of the blind hole is 0.1%-10% or 2%-4%, for example, it may be 0.1%, 1%, 2%, 3%, 4%, 5%, 6%, 7%, 8%, 9%, 10%, or any value therebetween.

In some embodiments, the blind holes are uniformly distributed.

Regarding the thickness of the first negative electrode active material layer, there is no particular limitation, and those commonly used in the art may be adopted. Typically, the thickness of the first negative electrode active material layer is 10-100 µm or 60-100 µm, for example, it may be 10 µm, 20 µm, 30 µm, 40 µm, 50 µm, 60 µm, 70 µm, 80 µm, 90 µm, 100 µm, or any value therebetween.

Regarding the thickness of the second negative electrode active material layer, there is no particular limitation, and those commonly used in the art may be adopted. Typically, the thickness of the second negative electrode active material layer is 10-200 µm or 60-100 µm, for example, it may be 10 µm, 20 µm, 30 µm, 40 µm, 50 µm, 60 µm, 70 µm, 80 µm, 90 µm, 100 µm, 110 µm, 120 µm, 130 µm, 140 µm, 150 µm, 160 µm, 170 µm, 180 µm, 190 µm, 200 µm, or any value therebetween.

Regarding a thickness of the third negative electrode active material layer, there is no particular limitation, and those commonly used in the art may be adopted. Typically, the thickness of the third negative electrode active material layer is 10-100 µm or 20-40 µm, for example, it may be 10 µm, 20 µm, 30 µm, 40 µm, 50 µm, 60 µm, 70 µm, 80 µm, 90 µm, 100 µm, or any value therebetween.

Exemplarily, the thickness of the second negative electrode active material layer is greater than the thickness of the first negative electrode active material layer and/or the third negative electrode active material layer. Such an arrangement can better reduce costs.

Regarding particle sizes of natural graphite and artificial graphite, there is no particular limitation, and those commonly used in the art may be adopted. Typically, a median particle size of artificial graphite in the negative electrode active material of the first negative electrode active material layer is 5-20 µm, for example, it may be 5 µm, 6 µm, 7 µm, 8 µm, 9 µm, 10 µm, 11 µm, 12 µm, 13 µm, 14 µm, 15 µm, 16 µm, 17 µm, 18 µm, 19 µm, 20 µm, or any value therebetween; and/or
a median particle size of natural graphite in the negative electrode active material of the second negative electrode active material layer is 5-20 µm, for example, it may be 5 µm, 6 µm, 7 µm, 8 µm, 9 µm, 10 µm, 11 µm, 12 µm, 13 µm, 14 µm, 15 µm, 16 µm, 17 µm, 18 µm, 19 µm, 20 µm, or any value therebetween; and/or
a median particle size of artificial graphite in the negative electrode active material of the third negative electrode active material layer is 5-20 µm, for example, it may be 5 µm, 6 µm, 7 µm, 8 µm, 9 µm, 10 µm, 11 µm, 12 µm, 13 µm, 14 µm, 15 µm, 16 µm, 17 µm, 18 µm, 19 µm, 20 µm, or any value therebetween.

Regarding the composition of the first negative electrode active material layer, the second negative electrode active material layer, and the third negative electrode active material layer, there is no particular limitation, and those commonly used in the art may be adopted. Typically, the first negative electrode active material layer, the second negative electrode active material layer, and the third negative electrode active material layer each include:
90-97wt% of a negative electrode active material, where for example, the weight percentage of the negative electrode active material may be 90wt%, 91wt%, 92wt%, 93wt%, 94wt%, 95wt%, 96wt%, 97wt%, or any value therebetween;
1-5wt% of a negative electrode conductive agent, where for example, the weight percentage of the negative electrode conductive agent may be 1wt%, 2wt%, 3wt%, 4wt%, 5wt%, or any value therebetween;
1-5wt% of a negative electrode binder, where for example, the weight percentage of the negative electrode binder may be 1wt%, 2wt%, 3wt%, 4wt%, 5wt%, or any value therebetween; and
1-3wt% of a negative electrode thickener, where for example, the weight percentage of the negative electrode thickener may be 1wt%, 2wt%, 3wt%, or any value therebetween;
where the above weight percentages are measured based on a total weight of the negative electrode active material, the negative electrode conductive agent, the negative electrode binder, and the negative electrode thickener.

Regarding the negative electrode active material, the negative electrode active material is selected from natural graphite or artificial graphite.

Regarding the negative electrode conductive agent, there is no particular limitation, and those commonly used in the art may be adopted. Typically, the negative electrode conductive agent is selected from one or more of the following group: conductive carbon black, carbon nanotubes, vapor-grown carbon fiber, Ketjen black, and graphene.

Regarding the negative electrode binder, there is no particular limitation, and those commonly used in the art may be adopted. Typically, the negative electrode binder is styrene-butadiene rubber and/or lithium polyacrylate.

Regarding the negative electrode thickener, there is no particular limitation, and those commonly used in the art may be adopted. Typically, the negative electrode thickener is selected from one or more of the following group: sodium carboxymethyl cellulose, polyvinylidene fluoride, lithium polyacrylate, and polyacrylonitrile.

### Method for preparing negative electrode plate

To at least partially address one or more of the above problems and other potential problems, a second exemplary embodiment of the present disclosure provides a method for preparing a negative electrode plate, including:
applying at least two negative electrode slurries containing negative electrode active materials onto a current collector in a stacking manner and performing drying to obtain a negative electrode plate;
where the negative electrode active material is selected from natural graphite or artificial graphite, and the at least two negative electrode slurries containing negative electrode active materials include at least one negative electrode slurry containing natural graphite and at least one negative electrode slurry containing artificial graphite.

In some embodiments, the method includes:
applying a first negative electrode slurry containing a negative electrode active material onto a current collector and performing drying to form a first negative electrode active material layer, where the negative electrode active material includes natural graphite; and
applying a second negative electrode slurry containing a negative electrode active material onto the first negative electrode active material layer and performing drying to form a second negative electrode active material layer, where the negative electrode active material includes artificial graphite;
to obtain a negative electrode plate.

Regarding the composition of the above first negative electrode slurry and second negative electrode slurry, there is no particular limitation, and those commonly used in the art may be adopted. Typically, the above first negative electrode slurry and second negative electrode slurry each include:
5-30wt% of a composition, where for example, the weight percentage of the composition may be 5wt%, 6wt%, 7wt%, 8wt%, 9wt%, 10wt%, 11wt%, 12wt%, 13wt%, 14wt%, 15wt%, 16wt%, 17wt%, 18wt%, 19wt%, 20wt%, 21wt%, 22wt%, 23wt%, 24wt%, 25wt%, 26wt%, 27wt%, 28wt%, 29wt%, 30wt%, or any value therebetween; and
70-95wt% of a solvent, where for example, the weight percentage of the solvent may be 70wt%, 71wt%, 72wt%, 73wt%, 74wt%, 75wt%, 76wt%, 77wt%, 78wt%, 79wt%, 80wt%, 81wt%, 82wt%, 83wt%, 84wt%, 85wt%, 86wt%, 87wt%, 88wt%, 89wt%, 90wt%, 91wt%, 92wt%, 93wt%, 94wt%, 95wt%, or any value therebetween;
where the composition includes:
   90-97wt% of a negative electrode active material, where for example, the weight percentage of the negative electrode active material may be 90wt%, 91wt%, 92wt%, 93wt%, 94wt%, 95wt%, 96wt%, 97wt%, or any value therebetween;
   1-5wt% of a negative electrode conductive agent, where for example, the weight percentage of the negative electrode conductive agent may be 1wt%, 2wt%, 3wt%, 4wt%, 5wt%, or any value therebetween;
   1-5wt% of a negative electrode binder, where for example, the weight percentage of the negative electrode binder may be 1wt%, 2wt%, 3wt%, 4wt%, 5wt%, or any value therebetween; and
   1-3wt% of a negative electrode thickener, where for example, the weight percentage of the negative electrode thickener may be 1wt%, 2wt%, 3wt%, or any value therebetween;
   where the above weight percentages are measured based on a total weight of the negative electrode active material, the negative electrode conductive agent, the negative electrode binder, and the negative electrode thickener.

In some embodiments, the method includes:
applying a first negative electrode slurry containing a negative electrode active material and a chemical hole-forming agent onto a current collector, performing drying, and forming holes to form a first negative electrode active material layer with one or more blind holes, where the negative electrode active material includes natural graphite, and an opening of the blind hole is located on an outer side of the first negative electrode active material layer; and
applying a second negative electrode slurry containing a negative electrode active material onto the first negative electrode active material layer and performing drying to form a second negative electrode active material layer, where the negative electrode active material includes artificial graphite;
to obtain a negative electrode plate.

In one embodiment, the first negative electrode slurry includes:
5-30wt% of a composition, where for example, the weight percentage of the composition may be 5wt%, 6wt%, 7wt%, 8wt%, 9wt%, 10wt%, 11wt%, 12wt%, 13wt%, 14wt%, 15wt%, 16wt%, 17wt%, 18wt%, 19wt%, 20wt%, 21wt%, 22wt%, 23wt%, 24wt%, 25wt%, 26wt%, 27wt%, 28wt%, 29wt%, 30wt%, or any value therebetween; and
70-95wt% of a solvent, where for example, the weight percentage of the solvent may be 70wt%, 71wt%, 72wt%, 73wt%, 74wt%, 75wt%, 76wt%, 77wt%, 78wt%, 79wt%, 80wt%, 81wt%, 82wt%, 83wt%, 84wt%, 85wt%, 86wt%, 87wt%, 88wt%, 89wt%, 90wt%, 91wt%, 92wt%, 93wt%, 94wt%, 95wt%, or any value therebetween;
where the composition includes:
   85-95wt% of a negative electrode active material, where for example, the weight percentage of the negative electrode active material may be 90wt%, 91wt%, 92wt%, 93wt%, 94wt%, 95wt%, 96wt%, 97wt%, or any value therebetween;
   1-5wt% of a negative electrode conductive agent, where for example, the weight percentage of the negative electrode conductive agent may be 1wt%, 2wt%, 3wt%, 4wt%, 5wt%, or any value therebetween;
   1-5wt% of a negative electrode binder, where for example, the weight percentage of the negative electrode binder may be 1wt%, 2wt%, 3wt%, 4wt%, 5wt%, or any value therebetween;
   1-3wt% of a negative electrode thickener, where for example, the weight percentage of the negative electrode thickener may be 1wt%, 2wt%, 3wt%, or any value therebetween; and
   1-10wt% of a hole-forming agent, where for example, the weight percentage of the hole-forming agent may be 1wt%, 2wt%, 3wt%, 4wt%, 5wt%, 6wt%, 7wt%, 8wt%, 9wt%, 10wt%, or any value therebetween;
   where the above weight percentages are measured based on a total weight of the negative electrode active material, the negative electrode conductive agent, the negative electrode binder, the negative electrode thickener, and the hole-forming agent.

In one embodiment, the second negative electrode slurry includes:
5-30wt% of a composition, where for example, the weight percentage of the composition may be 5wt%, 6wt%, 7wt%, 8wt%, 9wt%, 10wt%, 11wt%, 12wt%, 13wt%, 14wt%, 15wt%, 16wt%, 17wt%, 18wt%, 19wt%, 20wt%, 21wt%, 22wt%, 23wt%, 24wt%, 25wt%, 26wt%, 27wt%, 28wt%, 29wt%, 30wt%, or any value therebetween; and
70-95wt% of a solvent, where for example, the weight percentage of the solvent may be 70wt%, 71wt%, 72wt%, 73wt%, 74wt%, 75wt%, 76wt%, 77wt%, 78wt%, 79wt%, 80wt%, 81wt%, 82wt%, 83wt%, 84wt%, 85wt%, 86wt%, 87wt%, 88wt%, 89wt%, 90wt%, 91wt%, 92wt%, 93wt%, 94wt%, 95wt%, or any value therebetween;
where the composition includes:
   90-97wt% of a negative electrode active material, where for example, the weight percentage of the negative electrode active material may be 90wt%, 91wt%, 92wt%, 93wt%, 94wt%, 95wt%, 96wt%, 97wt%, or any value therebetween;
   1-5wt% of a negative electrode conductive agent, where for example, the weight percentage of the negative electrode conductive agent may be 1wt%, 2wt%, 3wt%, 4wt%, 5wt%, or any value therebetween;
   1-5wt% of a negative electrode binder, where for example, the weight percentage of the negative electrode binder may be 1wt%, 2wt%, 3wt%, 4wt%, 5wt%, or any value therebetween; and
   1-3wt% of a negative electrode thickener, where for example, the weight percentage of the negative electrode thickener may be 1wt%, 2wt%, 3wt%, or any value therebetween;
   where the above weight percentages are measured based on a total weight of the negative electrode active material, the negative electrode conductive agent, the negative electrode binder, and the negative electrode thickener.

In some embodiments, the method includes:
applying a first negative electrode slurry containing a negative electrode active material onto a current collector and performing drying to form a first negative electrode active material layer, where the negative electrode active material includes natural graphite;
performing physical hole formation on the first negative electrode active material layer to form a first negative electrode active material layer with one or more blind holes, where an opening of the blind hole is located on an outer side of the first negative electrode active material layer; and
applying a second negative electrode slurry containing a negative electrode active material onto the first negative electrode active material layer with one or more blind holes and performing drying to form a second negative electrode active material layer, where the negative electrode active material includes artificial graphite;
to obtain a negative electrode plate.

Regarding the composition of the above first negative electrode slurry and second negative electrode slurry, there is no particular limitation, and those commonly used in the art may be adopted. Typically, the above first negative electrode slurry and second negative electrode slurry each include:
5-30wt% of a composition, where for example, the weight percentage of the composition may be 5wt%, 6wt%, 7wt%, 8wt%, 9wt%, 10wt%, 11wt%, 12wt%, 13wt%, 14wt%, 15wt%, 16wt%, 17wt%, 18wt%, 19wt%, 20wt%, 21wt%, 22wt%, 23wt%, 24wt%, 25wt%, 26wt%, 27wt%, 28wt%, 29wt%, 30wt%, or any value therebetween; and
70-95wt% of a solvent, where for example, the weight percentage of the solvent may be 70wt%, 71wt%, 72wt%, 73wt%, 74wt%, 75wt%, 76wt%, 77wt%, 78wt%, 79wt%, 80wt%, 81wt%, 82wt%, 83wt%, 84wt%, 85wt%, 86wt%, 87wt%, 88wt%, 89wt%, 90wt%, 91wt%, 92wt%, 93wt%, 94wt%, 95wt%, or any value therebetween;
where the composition includes:
   90-97wt% of a negative electrode active material, where for example, the weight percentage of the negative electrode active material may be 90wt%, 91wt%, 92wt%, 93wt%, 94wt%, 95wt%, 96wt%, 97wt%, or any value therebetween;
   1-5wt% of a negative electrode conductive agent, where for example, the weight percentage of the negative electrode conductive agent may be 1wt%, 2wt%, 3wt%, 4wt%, 5wt%, or any value therebetween;
   1-5wt% of a negative electrode binder, where for example, the weight percentage of the negative electrode binder may be 1wt%, 2wt%, 3wt%, 4wt%, 5wt%, or any value therebetween; and
   1-3wt% of a negative electrode thickener, where for example, the weight percentage of the negative electrode thickener may be 1wt%, 2wt%, 3wt%, or any value therebetween;
   where the above weight percentages are measured based on a total weight of the negative electrode active material, the negative electrode conductive agent, the negative electrode binder, and the negative electrode thickener.

In some embodiments, a depth of the blind hole is 1%-80% or 10%-70% or 20%-60% of a thickness of the first negative electrode active material layer, for example, it may be 1%, 2%, 3%, 4%, 5%, 6%, 7%, 8%, 9%, 10%, 11%, 12%, 13%, 14%, 15%, 16%, 17%, 18%, 19%, 20%, 21%, 22%, 23%, 24%, 25%, 26%, 27%, 28%, 29%, 30%, 31%, 32%, 33%, 34%, 35%, 36%, 37%, 38%, 39%, 40%, 41%, 42%, 43%, 44%, 45%, 46%, 47%, 48%, 49%, 50%, 51%, 52%, 53%, 54%, 55%, 56%, 57%, 58%, 59%, 60%, 61%, 62%, 63%, 64%, 65%, 66%, 67%, 68%, 69%, 70%, 71%, 72%, 73%, 74%, 75%, 76%, 77%, 78%, 79%, 80%, or any value therebetween; and/or
a diameter of the blind hole is 20-300 µm or 80-150 µm, for example, it may be 20 µm, 30 µm, 40 µm, 50 µm, 60 µm, 70 µm, 80 µm, 90 µm, 100 µm, 110 µm, 120 µm, 130 µm, 140 µm, 150 µm, 160 µm, 170 µm, 180 µm, 190 µm, 200 µm, 210 µm, 220 µm, 230 µm, 240 µm, 250 µm, 260 µm, 270 µm, 280 µm, 290 µm, 300 µm, or any value therebetween; and/or
a spacing between the blind holes is 100-1000 µm or 400-500 µm, for example, it may be 100 µm, 110 µm, 120 µm, 130 µm, 140 µm, 150 µm, 160 µm, 170 µm, 180 µm, 190 µm, 200 µm, 210 µm, 220 µm, 230 µm, 240 µm, 250 µm, 260 µm, 270 µm, 280 µm, 290 µm, 300 µm, 310 µm, 320 µm, 330 µm, 340 µm, 350 µm, 360 µm, 370 µm, 380 µm, 390 µm, 400 µm, 410 µm, 420 µm, 430 µm, 440 µm, 450 µm, 460 µm, 470 µm, 480 µm, 490 µm, 500 µm, 510 µm, 520 µm, 530 µm, 540 µm, 550 µm, 560 µm, 570 µm, 580 µm, 590 µm, 600 µm, 610 µm, 620 µm, 630 µm, 640 µm, 650 µm, 660 µm, 670 µm, 680 µm, 690 µm, 700 µm, 710 µm, 720 µm, 730 µm, 740 µm, 750 µm, 760 µm, 770 µm, 780 µm, 790 µm, 800 µm, 810 µm, 820 µm, 830 µm, 840 µm, 850 µm, 860 µm, 870 µm, 880 µm, 890 µm, 900 µm, 910 µm, 920 µm, 930 µm, 940 µm, 950 µm, 960 µm, 970 µm, 980 µm, 990 µm, 1000 µm, or any value therebetween; and/or
a porosity of the blind hole is 0.1%-10% or 2%-4%, for example, it may be 0.1%, 1%, 2%, 3%, 4%, 5%, 6%, 7%, 8%, 9%, 10%, or any value therebetween.

In some embodiments, the blind holes are uniformly distributed.

Regarding the thickness of the first negative electrode active material layer, there is no particular limitation, and those commonly used in the art may be adopted. Typically, the thickness of the first negative electrode active material layer is 10-200 µm or 50-100 µm, for example, it may be 10 µm, 20 µm, 30 µm, 40 µm, 50 µm, 60 µm, 70 µm, 80 µm, 90 µm, 100 µm, 110 µm, 120 µm, 130 µm, 140 µm, 150 µm, 160 µm, 170 µm, 180 µm, 190 µm, 200 µm, or any value therebetween.

Regarding a thickness of the second negative electrode active material layer, there is no particular limitation, and those commonly used in the art may be adopted. Typically, the thickness of the second negative electrode active material layer is 10-200 µm or 50-100 µm, for example, it may be 10 µm, 20 µm, 30 µm, 40 µm, 50 µm, 60 µm, 70 µm, 80 µm, 90 µm, 100 µm, 110 µm, 120 µm, 130 µm, 140 µm, 150 µm, 160 µm, 170 µm, 180 µm, 190 µm, 200 µm, or any value therebetween.

Regarding a particle size of natural graphite, there is no particular limitation, and those commonly used in the art may be adopted. Typically, a median particle size of natural graphite is 5-20 µm, for example, it may be 5 µm, 6 µm, 7 µm, 8 µm, 9 µm, 10 µm, 11 µm, 12 µm, 13 µm, 14 µm, 15 µm, 16 µm, 17 µm, 18 µm, 19 µm, 20 µm, or any value therebetween.

Regarding a particle size of artificial graphite, there is no particular limitation, and those commonly used in the art may be adopted. Typically, a median particle size of artificial graphite is 5-20 µm, for example, it may be 5 µm, 6 µm, 7 µm, 8 µm, 9 µm, 10 µm, 11 µm, 12 µm, 13 µm, 14 µm, 15 µm, 16 µm, 17 µm, 18 µm, 19 µm, 20 µm, or any value therebetween.

In one embodiment, the method includes:
applying a first negative electrode slurry containing a negative electrode active material onto a current collector and performing drying to form a first negative electrode active material layer, where the negative electrode active material includes artificial graphite;
applying a second negative electrode slurry containing a negative electrode active material onto the first negative electrode active material layer and performing drying to form a second negative electrode active material layer, where the negative electrode active material includes natural graphite; and
applying a third negative electrode slurry containing a negative electrode active material onto the second negative electrode active material layer and performing drying to form a third negative electrode active material layer, where the negative electrode active material includes artificial graphite;
to obtain a negative electrode plate.

Regarding the composition of the above first negative electrode slurry, second negative electrode slurry, and third negative electrode slurry, there is no particular limitation, and those commonly used in the art may be adopted. Typically, the above first negative electrode slurry, second negative electrode slurry, and third negative electrode slurry each include:
5-30wt% of a composition, where for example, the weight percentage of the composition may be 5wt%, 6wt%, 7wt%, 8wt%, 9wt%, 10wt%, 11wt%, 12wt%, 13wt%, 14wt%, 15wt%, 16wt%, 17wt%, 18wt%, 19wt%, 20wt%, 21wt%, 22wt%, 23wt%, 24wt%, 25wt%, 26wt%, 27wt%, 28wt%, 29wt%, 30wt%, or any value therebetween; and
70-95wt% of a solvent, where for example, the weight percentage of the solvent may be 70wt%, 71wt%, 72wt%, 73wt%, 74wt%, 75wt%, 76wt%, 77wt%, 78wt%, 79wt%, 80wt%, 81wt%, 82wt%, 83wt%, 84wt%, 85wt%, 86wt%, 87wt%, 88wt%, 89wt%, 90wt%, 91wt%, 92wt%, 93wt%, 94wt%, 95wt%, or any value therebetween;
where the composition includes:
   90-97wt% of a negative electrode active material, where for example, the weight percentage of the negative electrode active material may be 90wt%, 91wt%, 92wt%, 93wt%, 94wt%, 95wt%, 96wt%, 97wt%, or any value therebetween;
   1-5wt% of a negative electrode conductive agent, where for example, the weight percentage of the negative electrode conductive agent may be 1wt%, 2wt%, 3wt%, 4wt%, 5wt%, or any value therebetween;
   1-5wt% of a negative electrode binder, where for example, the weight percentage of the negative electrode binder may be 1wt%, 2wt%, 3wt%, 4wt%, 5wt%, or any value therebetween; and
   1-3wt% of a negative electrode thickener, where for example, the weight percentage of the negative electrode thickener may be 1wt%, 2wt%, 3wt%, or any value therebetween;
   where the above weight percentages are measured based on a total weight of the negative electrode active material, the negative electrode conductive agent, the negative electrode binder, and the negative electrode thickener.

In one embodiment, the method includes:
applying a first negative electrode slurry containing a negative electrode active material and a chemical hole-forming agent onto a current collector and performing semi-drying at a low temperature to form a semi-dried first negative electrode active material layer, where the negative electrode active material includes artificial graphite;
applying a second negative electrode slurry containing a negative electrode active material onto the semi-dried first negative electrode active material layer, performing drying at a high temperature, and performing hole formation to form a second negative electrode active material layer and form one or more blind holes in a system composed of the first negative electrode active material layer and the second negative electrode active material layer, where the negative electrode active material includes natural graphite, and an opening of the blind hole is located on an outer side of the second negative electrode active material layer; and
applying a third negative electrode slurry containing a negative electrode active material onto the second negative electrode active material layer and performing drying to form a third negative electrode active material layer, where the negative electrode active material includes artificial graphite;
to obtain a negative electrode plate.

In one embodiment, the first negative electrode slurry includes:
5-30wt% of a composition, where for example, the weight percentage of the composition may be 5wt%, 6wt%, 7wt%, 8wt%, 9wt%, 10wt%, 11wt%, 12wt%, 13wt%, 14wt%, 15wt%, 16wt%, 17wt%, 18wt%, 19wt%, 20wt%, 21wt%, 22wt%, 23wt%, 24wt%, 25wt%, 26wt%, 27wt%, 28wt%, 29wt%, 30wt%, or any value therebetween; and
70-95wt% of a solvent, where for example, the weight percentage of the solvent may be 70wt%, 71wt%, 72wt%, 73wt%, 74wt%, 75wt%, 76wt%, 77wt%, 78wt%, 79wt%, 80wt%, 81wt%, 82wt%, 83wt%, 84wt%, 85wt%, 86wt%, 87wt%, 88wt%, 89wt%, 90wt%, 91wt%, 92wt%, 93wt%, 94wt%, 95wt%, or any value therebetween;
where the composition includes:
   85-95wt% of a negative electrode active material, where for example, the weight percentage of the negative electrode active material may be 90wt%, 91wt%, 92wt%, 93wt%, 94wt%, 95wt%, 96wt%, 97wt%, or any value therebetween;
   1-5wt% of a negative electrode conductive agent, where for example, the weight percentage of the negative electrode conductive agent may be 1wt%, 2wt%, 3wt%, 4wt%, 5wt%, or any value therebetween;
   1-5wt% of a negative electrode binder, where for example, the weight percentage of the negative electrode binder may be 1wt%, 2wt%, 3wt%, 4wt%, 5wt%, or any value therebetween;
   1-3wt% of a negative electrode thickener, where for example, the weight percentage of the negative electrode thickener may be 1wt%, 2wt%, 3wt%, or any value therebetween; and
   1-10wt% of a hole-forming agent, where for example, the weight percentage of the hole-forming agent may be 1wt%, 2wt%, 3wt%, 4wt%, 5wt%, 6wt%, 7wt%, 8wt%, 9wt%, 10wt%, or any value therebetween;
   where the above weight percentages are measured based on a total weight of the negative electrode active material, the negative electrode conductive agent, the negative electrode binder, the negative electrode thickener, and the hole-forming agent.

Regarding the composition of the above second negative electrode slurry and third negative electrode slurry, there is no particular limitation, and those commonly used in the art may be adopted. Typically, the above second negative electrode slurry and third negative electrode slurry each include:
5-30wt% of a composition, where for example, the weight percentage of the composition may be 5wt%, 6wt%, 7wt%, 8wt%, 9wt%, 10wt%, 11wt%, 12wt%, 13wt%, 14wt%, 15wt%, 16wt%, 17wt%, 18wt%, 19wt%, 20wt%, 21wt%, 22wt%, 23wt%, 24wt%, 25wt%, 26wt%, 27wt%, 28wt%, 29wt%, 30wt%, or any value therebetween; and
70-95wt% of a solvent, where for example, the weight percentage of the solvent may be 70wt%, 71wt%, 72wt%, 73wt%, 74wt%, 75wt%, 76wt%, 77wt%, 78wt%, 79wt%, 80wt%, 81wt%, 82wt%, 83wt%, 84wt%, 85wt%, 86wt%, 87wt%, 88wt%, 89wt%, 90wt%, 91wt%, 92wt%, 93wt%, 94wt%, 95wt%, or any value therebetween;
where the composition includes:
   90-97wt% of a negative electrode active material, where for example, the weight percentage of the negative electrode active material may be 90wt%, 91wt%, 92wt%, 93wt%, 94wt%, 95wt%, 96wt%, 97wt%, or any value therebetween;
   1-5wt% of a negative electrode conductive agent, where for example, the weight percentage of the negative electrode conductive agent may be 1wt%, 2wt%, 3wt%, 4wt%, 5wt%, or any value therebetween;
   1-5wt% of a negative electrode binder, where for example, the weight percentage of the negative electrode binder may be 1wt%, 2wt%, 3wt%, 4wt%, 5wt%, or any value therebetween; and
   1-3wt% of a negative electrode thickener, where for example, the weight percentage of the negative electrode thickener may be 1wt%, 2wt%, 3wt%, or any value therebetween;
   where the above weight percentages are measured based on a total weight of the negative electrode active material, the negative electrode conductive agent, the negative electrode binder, and the negative electrode thickener.

In one embodiment, the method includes:
applying a first negative electrode slurry containing a negative electrode active material onto a current collector and performing drying to form a first negative electrode active material layer, where the negative electrode active material includes artificial graphite;
applying a second negative electrode slurry containing a negative electrode active material onto the first negative electrode active material layer and performing drying to form a second negative electrode active material layer, where the negative electrode active material includes natural graphite;
performing physical hole formation on a system composed of the first negative electrode active material layer and the second negative electrode active material layer to form one or more blind holes, where an opening of the blind hole is located on an outer side of the second negative electrode active material layer; and
applying a third negative electrode slurry containing a negative electrode active material onto the second negative electrode active material layer and performing drying to form a third negative electrode active material layer, where the negative electrode active material includes artificial graphite;
to obtain a negative electrode plate.

Regarding the composition of the above first negative electrode slurry, second negative electrode slurry, and third negative electrode slurry, there is no particular limitation, and those commonly used in the art may be adopted. Typically, the above first negative electrode slurry, second negative electrode slurry, and third negative electrode slurry each include:
5-30wt% of a composition, where for example, the weight percentage of the composition may be 5wt%, 6wt%, 7wt%, 8wt%, 9wt%, 10wt%, 11wt%, 12wt%, 13wt%, 14wt%, 15wt%, 16wt%, 17wt%, 18wt%, 19wt%, 20wt%, 21wt%, 22wt%, 23wt%, 24wt%, 25wt%, 26wt%, 27wt%, 28wt%, 29wt%, 30wt%, or any value therebetween; and
70-95wt% of a solvent, where for example, the weight percentage of the solvent may be 70wt%, 71wt%, 72wt%, 73wt%, 74wt%, 75wt%, 76wt%, 77wt%, 78wt%, 79wt%, 80wt%, 81wt%, 82wt%, 83wt%, 84wt%, 85wt%, 86wt%, 87wt%, 88wt%, 89wt%, 90wt%, 91wt%, 92wt%, 93wt%, 94wt%, 95wt%, or any value therebetween;
where the composition includes:
   90-97wt% of a negative electrode active material, where for example, the weight percentage of the negative electrode active material may be 90wt%, 91wt%, 92wt%, 93wt%, 94wt%, 95wt%, 96wt%, 97wt%, or any value therebetween;
   1-5wt% of a negative electrode conductive agent, where for example, the weight percentage of the negative electrode conductive agent may be 1wt%, 2wt%, 3wt%, 4wt%, 5wt%, or any value therebetween;
   1-5wt% of a negative electrode binder, where for example, the weight percentage of the negative electrode binder may be 1wt%, 2wt%, 3wt%, 4wt%, 5wt%, or any value therebetween; and
   1-3wt% of a negative electrode thickener, where for example, the weight percentage of the negative electrode thickener may be 1wt%, 2wt%, 3wt%, or any value therebetween;
   where the above weight percentages are measured based on a total weight of the negative electrode active material, the negative electrode conductive agent, the negative electrode binder, and the negative electrode thickener.

Regarding the negative electrode conductive agent used in each of the above methods, there is no particular limitation, and those commonly used in the art may be adopted. Typically, the negative electrode conductive agent is selected from one or more of the following group: conductive carbon black, carbon nanotubes, vapor-grown carbon fiber, Ketjen black, and graphene.

Regarding the negative electrode binder used in each of the above methods, there is no particular limitation, and those commonly used in the art may be adopted. Typically, the negative electrode binder is styrene-butadiene rubber and/or lithium polyacrylate.

Regarding the negative electrode thickener used in each of the above methods, there is no particular limitation, and those commonly used in the art may be adopted. Typically, the negative electrode thickener is selected from one or more of the following group: sodium carboxymethyl cellulose, polyvinylidene fluoride, lithium polyacrylate, and polyacrylonitrile.

Regarding the hole-forming agent used in each of the above methods, there is no particular limitation, and those commonly used in the art may be adopted. Typically, the hole-forming agent is selected from one or more of the following group: hydrogen peroxide, urea, ammonium carbonate, ammonium bicarbonate, ammonium carbamate, calcium hydrogen phosphate, naphthalene, and p-toluenesulfonyl hydrazide (OBSH). For example, the hole-forming agent may include ammonium bicarbonate.

In some embodiments, a depth of the blind holes is 1%-80% or 10%-70% or 30%-60% of a sum of a thickness of the second negative electrode active material layer and a thickness of the first negative electrode active material layer, for example, it may be 1%, 2%, 3%, 4%, 5%, 6%, 7%, 8%, 9%, 10%, 11%, 12%, 13%, 14%, 15%, 16%, 17%, 18%, 19%, 20%, 21%, 22%, 23%, 24%, 25%, 26%, 27%, 28%, 29%, 30%, 31%, 32%, 33%, 34%, 35%, 36%, 37%, 38%, 39%, 40%, 41%, 42%, 43%, 44%, 45%, 46%, 47%, 48%, 49%, 50%, 51%, 52%, 53%, 54%, 55%, 56%, 57%, 58%, 59%, 60%, 61%, 62%, 63%, 64%, 65%, 66%, 67%, 68%, 69%, 70%, 71%, 72%, 73%, 74%, 75%, 76%, 77%, 78%, 79%, 80%, or any value therebetween; and/or
a diameter of the blind hole is 20-500 µm or 100-150 µm, for example, it may be 20 µm, 30 µm, 40 µm, 50 µm, 60 µm, 70 µm, 80 µm, 90 µm, 100 µm, 110 µm, 120 µm, 130 µm, 140 µm, 150 µm, 160 µm, 170 µm, 180 µm, 190 µm, 200 µm, 210 µm, 220 µm, 230 µm, 240 µm, 250 µm, 260 µm, 270 µm, 280 µm, 290 µm, 300 µm, 310 µm, 320 µm, 330 µm, 340 µm, 350 µm, 360 µm, 370 µm, 380 µm, 390 µm, 400 µm, 410 µm, 420 µm, 430 µm, 440 µm, 450 µm, 460 µm, 470 µm, 480 µm, 490 µm, 500 µm, or any value therebetween; and/or
a spacing between the blind holes is 100-1500 µm or 400-500 µm, for example, it may be 100 µm, 110 µm, 120 µm, 130 µm, 140 µm, 150 µm, 160 µm, 170 µm, 180 µm, 190 µm, 200 µm, 210 µm, 220 µm, 230 µm, 240 µm, 250 µm, 260 µm, 270 µm, 280 µm, 290 µm, 300 µm, 310 µm, 320 µm, 330 µm, 340 µm, 350 µm, 360 µm, 370 µm, 380 µm, 390 µm, 400 µm, 410 µm, 420 µm, 430 µm, 440 µm, 450 µm, 460 µm, 470 µm, 480 µm, 490 µm, 500 µm, 510 µm, 520 µm, 530 µm, 540 µm, 550 µm, 560 µm, 570 µm, 580 µm, 590 µm, 600 µm, 610 µm, 620 µm, 630 µm, 640 µm, 650 µm, 660 µm, 670 µm, 680 µm, 690 µm, 700 µm, 710 µm, 720 µm, 730 µm, 740 µm, 750 µm, 760 µm, 770 µm, 780 µm, 790 µm, 800 µm, 810 µm, 820 µm, 830 µm, 840 µm, 850 µm, 860 µm, 870 µm, 880 µm, 890 µm, 900 µm, 910 µm, 920 µm, 930 µm, 940 µm, 950 µm, 960 µm, 970 µm, 980 µm, 990 µm, 1000 µm, 1100 µm, 1200 µm, 1300 µm, 1400 µm, 1500 µm, or any value therebetween; and/or
a porosity of the blind hole is 0.1%-10% or 2%-4%, for example, it may be 0.1%, 1%, 2%, 3%, 4%, 5%, 6%, 7%, 8%, 9%, 10%, or any value therebetween.

In some embodiments, the blind holes are uniformly distributed.

Regarding the thickness of the first negative electrode active material layer, there is no particular limitation, and those commonly used in the art may be adopted. Typically, the thickness of the first negative electrode active material layer is 10-100 µm or 60-100 µm, for example, it may be 10 µm, 20 µm, 30 µm, 40 µm, 50 µm, 60 µm, 70 µm, 80 µm, 90 µm, 100 µm, or any value therebetween.

Regarding the thickness of the second negative electrode active material layer, there is no particular limitation, and those commonly used in the art may be adopted. Typically, the thickness of the second negative electrode active material layer is 10-200 µm or 60-100 µm, for example, it may be 10 µm, 20 µm, 30 µm, 40 µm, 50 µm, 60 µm, 70 µm, 80 µm, 90 µm, 100 µm, 110 µm, 120 µm, 130 µm, 140 µm, 150 µm, 160 µm, 170 µm, 180 µm, 190 µm, 200 µm, or any value therebetween.

Regarding a thickness of the third negative electrode active material layer, there is no particular limitation, and those commonly used in the art may be adopted. Typically, the thickness of the third negative electrode active material layer is 10-100 µm or 20-40 µm, for example, it may be 10 µm, 20 µm, 30 µm, 40 µm, 50 µm, 60 µm, 70 µm, 80 µm, 90 µm, 100 µm, or any value therebetween.

Regarding particle sizes of natural graphite and artificial graphite, there is no particular limitation, and those commonly used in the art may be adopted. Typically, a median particle size of artificial graphite in the negative electrode active material of the first negative electrode active material layer is 5-20 µm, for example, it may be 5 µm, 6 µm, 7 µm, 8 µm, 9 µm, 10 µm, 11 µm, 12 µm, 13 µm, 14 µm, 15 µm, 16 µm, 17 µm, 18 µm, 19 µm, 20 µm, or any value therebetween; and/or
a median particle size of natural graphite in the negative electrode active material of the second negative electrode active material layer is 5-20 µm, for example, it may be 5 µm, 6 µm, 7 µm, 8 µm, 9 µm, 10 µm, 11 µm, 12 µm, 13 µm, 14 µm, 15 µm, 16 µm, 17 µm, 18 µm, 19 µm, 20 µm, or any value therebetween; and/or
a median particle size of artificial graphite in the negative electrode active material of the third negative electrode active material layer is 5-20 µm, for example, it may be 5 µm, 6 µm, 7 µm, 8 µm, 9 µm, 10 µm, 11 µm, 12 µm, 13 µm, 14 µm, 15 µm, 16 µm, 17 µm, 18 µm, 19 µm, 20 µm, or any value therebetween.

### Lithium-ion battery

To at least partially address one or more of the above problems and other potential problems, a third exemplary embodiment of the present disclosure provides a lithium-ion battery, including the negative electrode plate according to the above first exemplary embodiment or a negative electrode plate prepared by the method according to the above second exemplary embodiment. Typically, the lithium-ion battery may be a battery cell, a battery module, or a battery pack.

The following describes examples of the present disclosure. The examples described below are exemplary and are only intended to explain the present disclosure, and should not be construed as limiting the present disclosure. Examples whose technical solutions or conditions are not specified are made in accordance with technical solutions or conditions described in literature in the field or made in accordance with product instructions. The reagents or instruments used are all conventional products that are commercially available if no manufacturer is indicated.

### Example 1 (preparation of negative electrode plate by physical hole formation method, three-layer structure)

A negative electrode plate was prepared with reference to FIG. 1, where first, a system composed of a first negative electrode active material layer 102 and a second negative electrode active material layer 105 was formed on a current collector 101; then, hole formation was performed in the system to form a blind hole 107; and finally, a third negative electrode active material layer 108 is formed on the second negative electrode active material layer 105. A specific method included the following steps:
95.5 parts by weight of artificial graphite (with a median particle size of 12 µm) as a negative electrode active material, 1 part by weight of carbon nanotubes as a conductive agent, 2 parts by weight of a mixture of styrene-butadiene rubber and lithium polyacrylate (at a mass ratio of 1:1) as a binder, and 1.5 parts by weight of sodium carboxymethyl cellulose as a thickener were mixed with 1000 parts by weight of deionized water as a solvent to form a first negative electrode slurry, and the obtained first negative electrode slurry was uniformly applied onto a copper foil current collector; and heating and drying were performed at 60°C to form a first negative electrode active material layer, where a thickness of the first negative electrode active material layer was 50 µm.
95.5 parts by weight of natural graphite (with a median particle size of 18 µm) as a negative electrode active material, 1 part by weight of carbon nanotubes as a conductive agent, 2 parts by weight of a mixture of styrene-butadiene rubber and lithium polyacrylate (at a mass ratio of 1:1) as a binder, and 1.5 parts by weight of sodium carboxymethyl cellulose as a thickener were mixed with 1000 parts by weight of deionized water as a solvent to form a second negative electrode slurry, and the obtained second negative electrode slurry was uniformly applied onto the above first negative electrode active material layer. Heating and drying were performed at 60°C to form a second negative electrode active material layer, where a thickness of the second negative electrode active material layer was 60 µm.

A punching device (that was, an electrode plate punching device disclosed in patent CN216084936U) was used to perform physical hole formation on the system composed of the first negative electrode active material layer and the second negative electrode active material layer to form multiple uniformly distributed blind holes (with a porosity of 4%), where an opening of the blind hole was located on the outer side of the second negative electrode active material layer, a depth of the blind hole was 90 µm, a diameter of the blind hole was 200 µm, and a spacing between the blind holes was 400 µm.

95.5 parts by weight of artificial graphite (with a median particle size of 12 µm) as a negative electrode active material, 1 part by weight of carbon nanotubes as a conductive agent, 2 parts by weight of a mixture of styrene-butadiene rubber and lithium polyacrylate (at a mass ratio of 1:1) as a binder, and 1.5 parts by weight of sodium carboxymethyl cellulose as a thickener were mixed with 1000 parts by weight of deionized water as a solvent to form a third negative electrode slurry, and the obtained third negative electrode slurry was uniformly applied onto the above second negative electrode active material layer; and heating and drying were performed at 60°C to form a third negative electrode active material layer, where a thickness of the third negative electrode active material layer was 30 µm.

Then, cold pressing and slitting were performed to obtain a negative electrode plate.

### Example 2 (preparation of negative electrode plate by chemical hole formation method, three-layer structure)

A negative electrode plate was prepared in the following method:
90 parts by weight of artificial graphite (with a median particle size of 12 µm) as a negative electrode active material, 1 part by weight of carbon nanotubes as a conductive agent, 2 parts by weight of a mixture of styrene-butadiene rubber and lithium polyacrylate (at a mass ratio of 1:1) as a binder, 2 parts by weight of sodium carboxymethyl cellulose as a thickener, and 5 parts by weight of ammonium bicarbonate as a hole-forming agent were mixed with 1000 parts by weight of deionized water as a solvent to form a first negative electrode slurry, and the obtained first negative electrode slurry was uniformly applied onto a copper foil current collector; and semi-drying was performed at a low temperature of 50°C to form a semi-dried first negative electrode active material layer, where a thickness of the first negative electrode active material layer was 50 µm.
95.5 parts by weight of natural graphite (with a median particle size of 18 µm) as a negative electrode active material, 1 part by weight of carbon nanotubes as a conductive agent, 2 parts by weight of a mixture of styrene-butadiene rubber and lithium polyacrylate (at a mass ratio of 1:1) as a binder, and 1.5 parts by weight of sodium carboxymethyl cellulose as a thickener were mixed with 1000 parts by weight of deionized water as a solvent to form a second negative electrode slurry, and the obtained second negative electrode slurry was uniformly applied onto the above semi-dried first negative electrode active material layer; and drying and hole formation were performed at a high temperature of 60°C to form a second negative electrode active material layer and form one or more uniformly distributed blind holes (with a porosity of 4%) in a system composed of the first negative electrode active material layer and the second negative electrode active material layer, where a thickness of the second negative electrode active material layer was 60 µm, a depth of the blind hole was 90 µm, a diameter of the blind hole was 200 µm, and a spacing between the blind holes was 400 µm.
95.5 parts by weight of artificial graphite (with a median particle size of 12 µm) as a negative electrode active material, 1 part by weight of carbon nanotubes as a conductive agent, 2 parts by weight of a mixture of styrene-butadiene rubber and lithium polyacrylate (mass ratio of 1:1) as a binder, and 1.5 parts by weight of sodium carboxymethyl cellulose as a thickener were mixed with 1000 parts by weight of deionized water as a solvent to form a third negative electrode slurry, and the obtained third negative electrode slurry was uniformly applied onto the above second negative electrode active material layer; and heating and drying were performed at 60°C to form a third negative electrode active material layer, where a thickness of the third negative electrode active material layer was 30 µm.

Then, cold pressing and slitting were performed to obtain a negative electrode plate.

### Example 3 (no hole formation, three-layer structure)

A negative electrode plate was prepared in the following method:
95.5 parts by weight of artificial graphite (with a median particle size of 12 µm) as a negative electrode active material, 1 part by weight of carbon nanotubes as a conductive agent, 2 parts by weight of a mixture of styrene-butadiene rubber and lithium polyacrylate (at a mass ratio of 1:1) as a binder, and 1.5 parts by weight of sodium carboxymethyl cellulose as a thickener were mixed with 1000 parts by weight of deionized water as a solvent to form a first negative electrode slurry, and the obtained first negative electrode slurry was uniformly applied onto a copper foil current collector; and heating and drying were performed at 60°C to form a first negative electrode active material layer, where a thickness of the first negative electrode active material layer was 50 µm.
95.5 parts by weight of natural graphite (with a median particle size of 18 µm) as a negative electrode active material, 1 part by weight of carbon nanotubes as a conductive agent, 2 parts by weight of a mixture of styrene-butadiene rubber and lithium polyacrylate (at a mass ratio of 1:1) as a binder, and 1.5 parts by weight of sodium carboxymethyl cellulose as a thickener were mixed with 1000 parts by weight of deionized water as a solvent to form a second negative electrode slurry, and the obtained second negative electrode slurry was uniformly applied onto the above first negative electrode active material layer; and heating and drying were performed at 60°C to form a second negative electrode active material layer, where a thickness of the second negative electrode active material layer was 60 µm.
95.5 parts by weight of artificial graphite (with a median particle size of 12 µm) as a negative electrode active material, 1 part by weight of carbon nanotubes as a conductive agent, 2 parts by weight of a mixture of styrene-butadiene rubber and lithium polyacrylate (mass ratio of 1:1) as a binder, and 1.5 parts by weight of sodium carboxymethyl cellulose as a thickener were mixed with 1000 parts by weight of deionized water as a solvent to form a third negative electrode slurry, and the obtained third negative electrode slurry was uniformly applied onto the above second negative electrode active material layer; and heating and drying were performed at 60°C to form a third negative electrode active material layer, where a thickness of the third negative electrode active material layer was 30 µm.

Then, cold pressing and slitting were performed to obtain a negative electrode plate.

### Example 4 (preparation of negative electrode plate by physical hole formation method, two-layer structure)

A negative electrode plate was prepared with reference to FIG. 2, where first, a first negative electrode active material layer 102 was formed on a current collector 101, then hole formation was performed on the first negative electrode active material layer 102 to form a blind hole 103 (including a channel 104). A specific method included the following method:
95.5 parts by weight of natural graphite (with a median particle size of 18 µm) as a negative electrode active material, 1 part by weight of carbon nanotubes as a conductive agent, 2 parts by weight of a mixture of styrene-butadiene rubber and lithium polyacrylate (at a mass ratio of 1:1) as a binder, and 1.5 parts by weight of sodium carboxymethyl cellulose as a thickener were mixed with 1000 parts by weight of deionized water as a solvent to form a first negative electrode slurry, where the obtained negative electrode slurry was uniformly applied onto a copper foil current collector; and heating and drying were performed at 60°C to form a first negative electrode active material layer, where a thickness of the first negative electrode active material layer was 60 µm.

Physical hole formation was performed on the first negative electrode active material layer to form multiple uniformly distributed blind holes (with a porosity of 4%), where an opening of the blind hole was located on an outer side of the first negative electrode active material layer, a depth of the blind hole was 90 µm, a diameter of the blind hole was 200 µm, and a spacing between the blind holes was 400 µm.

95.5 parts by weight of artificial graphite (with a median particle size of 12 µm) as a negative electrode active material, 1 part by weight of carbon nanotubes as a conductive agent, 2 parts by weight of a mixture of styrene-butadiene rubber and lithium polyacrylate (mass ratio of 1:1) as a binder, and 1.5 parts by weight of sodium carboxymethyl cellulose as a thickener were mixed with 1000 parts by weight of deionized water as a solvent to form a second negative electrode slurry, where the obtained second negative electrode slurry was uniformly applied onto the above first negative electrode active material layer; and heating and drying were performed at 60°C to form a second negative electrode active material layer, where a thickness of the second negative electrode active material layer was 50 µm.

Then, cold pressing and slitting were performed to obtain a negative electrode plate.

### Example 5 (preparation of negative electrode plate by chemical hole formation method, two-layer structure)

A negative electrode plate was prepared in the following method:
90 parts by weight of natural graphite (with a median particle size of 18 µm) as a negative electrode active material, 1 part by weight of carbon nanotubes as a conductive agent, 2 parts by weight of a mixture of styrene-butadiene rubber and lithium polyacrylate (mass ratio of 1:1) as a binder, 2 parts by weight of sodium carboxymethyl cellulose as a thickener, and 5 parts by weight of ammonium bicarbonate as a hole-forming agent were mixed with 1000 parts by weight of deionized water as a solvent to form a first negative electrode slurry, where the obtained first negative electrode slurry was uniformly applied onto a copper foil current collector; and drying and hole formation were performed at a high temperature of 60°C to form a first negative electrode active material layer with multiple uniformly distributed blind holes (with a porosity of 4%), where an opening of the blind hole was located on an outer side of the first negative electrode active material layer, a depth of the blind hole was 90 µm, a diameter of the blind hole was 200 µm, a spacing between the blind holes was 400 µm, and a thickness of the first negative electrode active material layer was 60 µm.
95.5 parts by weight of artificial graphite (with a median particle size of 12 µm) as a negative electrode active material, 1 part by weight of carbon nanotubes as a conductive agent, 2 parts by weight of a mixture of styrene-butadiene rubber and lithium polyacrylate (at a mass ratio of 1:1) as a binder, and 1.5 parts by weight of sodium carboxymethyl cellulose as the thickener are mixed with 1000 parts by weight of deionized water as a solvent to form a second negative electrode slurry, and the obtained second negative electrode slurry was uniformly applied onto the above first negative electrode active material layer; and heating and drying were performed at 60°C to form a second negative electrode active material layer, where a thickness of the second negative electrode active material layer was 50 µm.

Then, cold pressing and slitting were performed to obtain the negative electrode plate.

### Example 6 (no hole formation, two-layer structure)

95.5 parts by weight of natural graphite (with a median particle size of 18 µm) as a negative electrode active material, 1 part by weight of carbon nanotubes as a conductive agent, 2 parts by weight of a mixture of styrene-butadiene rubber and lithium polyacrylate (mass ratio of 1:1) as a binder, and 1.5 parts by weight of sodium carboxymethyl cellulose as a thickener were mixed with 1000 parts by weight of deionized water as a solvent to form a first negative electrode slurry, where the obtained first negative electrode slurry was uniformly applied onto a copper foil current collector; and heating and drying were performed at 60°C to form a first negative electrode active material layer, where a thickness of the first negative electrode active material layer was 60 µm.

95.5 parts by weight of artificial graphite (with a median particle size of 12 µm) as a negative electrode active material, 1 part by weight of carbon nanotubes as a conductive agent, 2 parts by weight of a mixture of styrene-butadiene rubber and lithium polyacrylate (mass ratio of 1:1) as a binder, and 1.5 parts by weight of sodium carboxymethyl cellulose as a thickener were mixed with 1000 parts by weight of deionized water as a solvent to form a second negative electrode slurry, where the obtained second negative electrode slurry was uniformly applied onto the above first negative electrode active material layer; and heating and drying were performed at 60°C to form a second negative electrode active material layer, where a thickness of the second negative electrode active material layer was 80 µm.

Then, cold pressing and slitting were performed to obtain a negative electrode plate.

### Example 7

This example was essentially the same as Example 1 except that the depth of the blind hole was 70 µm.

### Example 8

This example was essentially the same as Example 1 except that the depth of the blind hole was 108 µm.

### Example 9

This example was essentially the same as Example 1 except that the diameter of the blind hole was 100 µm.

### Example 10

This example was essentially the same as Example 1 except that the diameter of the blind holes was 500 µm.

### Example 11

This example was essentially the same as Example 1 except that the spacing between the blind holes was 100 µm.

### Example 12

This example was essentially the same as Example 1 except that the spacing between the blind holes was 1500 µm.

### Example 13

This example was essentially the same as Example 1 except that the porosity of the blind hole was 0.1%.

### Example 14

This example was essentially the same as Example 1 except that the porosity of the blind hole was 10%.

### Example 15

This example was essentially the same as Example 1 except that the thickness of the first negative electrode active material layer was 10 µm.

### Example 16

This example was essentially the same as Example 1 except that the thickness of the first negative electrode active material layer was 70 µm.

### Example 17

This example was essentially the same as Example 1 except that the thickness of the second negative electrode active material layer was 10 µm.

### Example 18

This example was essentially the same as Example 1 except that the thickness of the second negative electrode active material layer was 70 µm.

### Example 19

This example was essentially the same as Example 1 except that the thickness of the third negative electrode active material layer was 10 µm.

### Example 20

This example was essentially the same as Example 1 except that the thickness of the third negative electrode active material layer was 50 µm.

### Example 21

This example was essentially the same as Example 1 except that the median particle size of the artificial graphite in the negative electrode active material of the first negative electrode active material layer was 10 µm, the median particle size of the natural graphite in the negative electrode active material of the second negative electrode active material layer was 10 µm, and the median particle size of the artificial graphite in the negative electrode active material of the third negative electrode active material layer was 10 µm.

### Example 22

This example was essentially the same as Example 1 except that the median particle size of the artificial graphite in the negative electrode active material of the first negative electrode active material layer was 20 µm, the median particle size of the natural graphite in the negative electrode active material of the second negative electrode active material layer was 25 µm, and the median particle size of the artificial graphite in the negative electrode active material of the third negative electrode active material layer was 20 µm.

### Comparative example 1 (one-layer structure)

95.5 parts by weight of natural graphite (with a median particle size of 18 µm) as a negative electrode active material, 1 part by weight of carbon nanotubes as a conductive agent, 2 parts by weight of a mixture of styrene-butadiene rubber and lithium polyacrylate (at a mass ratio of 1:1) as a binder, and 1.5 parts by weight of sodium carboxymethyl cellulose as a thickener were mixed with 1000 parts by weight of deionized water as a solvent to form a negative electrode slurry, and the obtained negative electrode slurry was uniformly applied onto a copper foil current collector; and heating and drying were performed at 60°C to form a first negative electrode active material layer, where a thickness of the first negative electrode active material layer was 140 µm.

Then, cold pressing and slitting were performed to obtain a negative electrode plate.

### Comparative example 2 (one-layer structure)

95.5 parts by weight of artificial graphite (with a median particle size of 12 µm) as a negative electrode active material, 1 part by weight of carbon nanotubes as a conductive agent, 2 parts by weight of a mixture of styrene-butadiene rubber and lithium polyacrylate (at a mass ratio of 1:1) as a binder, and 1.5 parts by weight of sodium carboxymethyl cellulose as a thickener were mixed with 1000 parts by weight of deionized water as a solvent to form a negative electrode slurry, and the obtained negative electrode slurry was uniformly applied onto a copper foil current collector; and heating and drying were performed at 60°C to form a first negative electrode active material layer, where a thickness of the first negative electrode active material layer was 140 µm.

Then, cold pressing and slitting were performed to obtain a negative electrode plate.

### Test

### Test standard

The diameter of the blind hole was obtained through SEM observation, and a method for determining the diameter of the blind hole was as follows: a maximum distance at the edge of an opening side of the hole, that was, two points at the edge of the opening side of the hole were selected, and a distance between the two points was measured, where the maximum distance was the diameter of the blind hole.

The spacing between the blind holes was obtained through SEM observation, and the spacing between the blind holes referred to a minimum distance between the edges of the opening sides of two holes, that was, one point on the edge of the opening side of one hole and one point on the edge of the opening side of the other hole were selected, and a distance between the two points was measured, where the minimum distance was the spacing between the blind holes.

The porosity of the blind hole was measured according to the following method:

For a regular cylindrical hole, the porosity of the blind hole was calculated by dividing a hole-forming area by a unit area within the unit area (for example, an electrode plate with an area of 1 mm²), and then multiplying by the ratio of the hole-forming depth to the total thickness.

For a conical hole, the porosity of the blind hole was calculated by dividing a hole-forming area by a unit area within the unit area (for example, an electrode plate with an area of 1 mm²), multiplying by the ratio of the hole-forming depth to the total thickness, and then multiplying by 1/3.

### Test results

Specific test results are shown in Table 1 below.

**Table 1**

| Number | Structure | Hole formation method | Depth of blind hole | Diameter of blind hole | Spacing of blind hole | Porosity of blind hole | Thickness of first negative electrode active material layer | Thickness of second negative electrode active material layer | Thickness of third negative electrode active material layer | Median particle size of artificial graphite | Median particle size of natural graphite | Energy density | Time of fast charging to 10%-80% SOC |
|---|---|---|---|---|---|---|---|---|---|---|---|---|---|
| Example 1 | Three-layer structure | Physical | 90 µm | 200 µm | 400 µm | 4% | 50 µm | 60 µm | 30 µm | 12 µm | 18 µm | 253 Wh/kg | 37.2 min |
| Example 2 | Three-layer structure | Chemical | 90 µm | 200 µm | 400 µm | 4% | 50 µm | 60 µm | 30 µm | 12 µm | 18 µm | 252.6 Wh/kg | 37.8 min |
| Example 3 | Three-layer structure | No hole formation | - | - | - | - | 50 µm | 60 µm | 30 µm | 12 µm | 18 µm | 249 Wh/kg | 42 min |
| Example 4 | Two-layer structure | Physical | 90 µm | 200 µm | 400 µm | 4% | 60 µm | 50 µm | - | 12 µm | 18 µm | 251.2 Wh/kg | 36.0 min |
| Example 5 | Two-layer structure | Chemical | 90 µm | 200 µm | 400 µm | 4% | 60 µm | 50 µm | - | 12 µm | 18 µm | 251.1 Wh/kg | 39.8 min |
| Example 6 | Two-layer structure | No hole formation | - | - | - | - | 60 µm | 50 µm | - | 12 µm | 18 µm | 248.5 Wh/kg | 43.4 min |
| Example 7 | Three-layer structure | Physical | 70 µm | 200 µm | 400 µm | 3% | 50 µm | 60 µm | 30 µm | 12 µm | 18 µm | 253.4 Wh/kg | 37.8 min |
| Example 8 | Three-layer structure | Physical | 108 µm | 200 µm | 400 µm | 5% | 50 µm | 60 µm | 30 µm | 12 µm | 18 µm | 252.5 Wh/kg | 37.7 min |
| Example 9 | Three-layer structure | Physical | 90 µm | 100 µm | 400 µm | 1% | 50 µm | 60 µm | 30 µm | 12 µm | 18 µm | 253 Wh/kg | 38.2 min |
| Example 10 | Three-layer structure | Physical | 90 µm | 400 µm | 400 µm | 16% | 50 µm | 60 µm | 30 µm | 12 µm | 18 µm | 240 Wh/kg | 38.4 min |
| Example 11 | Three-layer structure | Physical | 90 µm | 200 µm | 100 µm | 16% | 50 µm | 60 µm | 30 µm | 12 µm | 18 µm | 240 Wh/kg | 37.7 min |
| Example 12 | Three-layer structure | Physical | 90 µm | 200 µm | 1600 µm | 1% | 50 µm | 60 µm | 30 µm | 12 µm | 18 µm | 253.2 Wh/kg | 40.8 min |
| Example 13 | Three-layer structure | Physical | 90 µm | 200 µm | 400 µm | 0.1% | 50 µm | 60 µm | 30 µm | 12 µm | 18 µm | 248.4 Wh/kg | 43 min |
| Example 14 | Three-layer structure | Physical | 90 µm | 200 µm | 400 µm | 10% | 50 µm | 60 µm | 30 µm | 12 µm | 18 µm | 249.6 Wh/kg | 37.9 min |
| Example 15 | Three-layer structure | Physical | 90 µm | 100 µm | 400 µm | 4% | 10 µm | 60 µm | 30 µm | 12 µm | 18 µm | 252.9 Wh/kg | 39.4 min |
| Example 16 | Three-layer structure | Physical | 90 µm | 100 µm | 400 µm | 4% | 70 µm | 60 µm | 30 µm | 12 µm | 18 µm | 249.3 Wh/kg | 44.8 min |
| Example 17 | Three-layer structure | Physical | 90 µm | 100 µm | 400 µm | 4% | 50 µm | 10 µm | 30 µm | 12 µm | 18 µm | 248.7 Wh/kg | 38.4 min |
| Example 18 | Three-layer structure | Physical | 90 µm | 100 µm | 400 µm | 4% | 50 µm | 70 µm | 30 µm | 12 µm | 18 µm | 253.4 Wh/kg | 45.7 min |
| Example 19 | Three-layer structure | Physical | 90 µm | 100 µm | 400 µm | 4% | 50 µm | 60 µm | 10 µm | 12 µm | 18 µm | 252.8 Wh/kg | 39.3 min |
| Example 20 | Three-layer structure | Physical | 90 µm | 100 µm | 400 µm | 4% | 50 µm | 60 µm | 50 µm | 12 µm | 18 µm | 253 Wh/kg | 44.2 min |
| Example 21 | Three-layer structure | Physical | 90 µm | 100 µm | 400 µm | 4% | 50 µm | 60 µm | 20 µm | 10 µm | 10 µm | 253 Wh/kg | 37.6 min |
| Example 22 | Three-layer structure | Physical | 90 µm | 100 µm | 400 µm | 4% | 50 µm | 60 µm | 20 µm | 20 µm | 25 µm | 253 Wh/kg | 37.2 min |
| Comparative example 1 | One-layer structure using only natural graphite and having a thickness of 140 µm | | | | | | | | | | | 257 Wh/kg | 49 min |
| Comparative example 2 | One-layer structure using only artificial graphite and having a thickness of 140 µm | | | | | | | | | | | 248.5 Wh/kg | 39 min |

It can be obviously seen from the data of Examples 3 and 6 in Table 1 that the present disclosure, by adopting a method of stacking artificial graphite layers and natural graphite layers, combines the advantages of high energy density of artificial graphite and low cost of natural graphite, thereby achieving a balanced performance compromise, that is, maintaining high energy density and short fast-charging time while keeping costs low. In some exemplary embodiments, it can be also obviously seen from the data of other examples in Table 1 that forming holes in the negative electrode active material layer can create efficient lithium intercalation channels, thereby improving overall lithium intercalation capability compared to examples 3 and 6, and achieving a beneficial technical effect of better balancing high energy density and high fast-charging capability and controlling costs.

It should be noted that the present disclosure is not limited to the above embodiments. The foregoing embodiments are merely examples, and embodiments having substantially the same constructions and the same effects as the technical idea within the scope of the technical solutions of the present disclosure are all included in the technical scope of the present disclosure. In addition, without departing from the essence of the present disclosure, various modifications made to the embodiments that can be conceived by persons skilled in the art, and other manners constructed by combining some of the constituent elements in the embodiments are also included in the scope of the present disclosure.

## Claims

1. A negative electrode plate, comprising:
a current collector; and
a negative electrode active material layer stacked with the current collector;
wherein the negative electrode active material layer comprises at least two stacked negative electrode active material layers; the negative electrode active material layer comprises a negative electrode active material selected from natural graphite or artificial graphite; and the at least two negative electrode active material layers comprise at least one negative electrode active material layer containing natural graphite and at least one negative electrode active material layer containing artificial graphite.

2. The negative electrode plate according to claim 1, wherein the negative electrode plate has at least one blind hole, and the blind hole runs through at least part of the negative electrode active material layer containing natural graphite.

3. The negative electrode plate according to claim 2, wherein the negative electrode active material layer comprises a first negative electrode active material layer and a second negative electrode active material layer stacked in sequence; the first negative electrode active material layer is located between the second negative electrode active material layer and the current collector; a negative electrode active material in the first negative electrode active material layer comprises natural graphite; and a negative electrode active material in the second negative electrode active material layer comprises artificial graphite.

4. The negative electrode plate according to claim 3, wherein an opening of the blind hole is located on a side of the first negative electrode active material layer facing the second negative electrode active material layer; and the blind hole is provided with the negative electrode active material of the second negative electrode active material layer.

5. The negative electrode plate according to claim 4, wherein a depth of the blind hole is 1%-80% of a thickness of the first negative electrode active material layer, preferably 10%-70%, and more preferably 20%-60%; and/or
a diameter of the blind hole is 20-300 µm, preferably 80-150 µm; and/or
a spacing between the blind holes is 100-1000 µm, preferably 400-500 µm; and/or
a porosity of the blind hole is 0.1%-10%, preferably 2%-4%.

6. The negative electrode plate according to any one of claims 3 to 5, wherein the thickness of the first negative electrode active material layer is 10-200 µm, preferably 50-100 µm; and/or
a thickness of the second negative electrode active material layer is 10-200 µm, preferably 50-100 µm.

7. The negative electrode plate according to any one of claims 3 to 6, wherein the thickness of the first negative electrode active material layer is greater than the thickness of the second negative electrode active material layer.

8. The negative electrode plate according to claim 2, wherein the negative electrode active material layer comprises a first negative electrode active material layer, a second negative electrode active material layer, and a third negative electrode active material layer stacked in sequence, the first negative electrode active material layer is located between the second negative electrode active material layer and the current collector; a negative electrode active material in the first negative electrode active material layer comprises artificial graphite; a negative electrode active material in the second negative electrode active material layer comprises natural graphite; and a negative electrode active material in the third negative electrode active material layer comprises artificial graphite.

9. The negative electrode plate according to claim 8, wherein the blind hole runs through the second negative electrode active material layer and part of the first negative electrode active material layer; an opening of the blind hole is located on a side of the second negative electrode active material layer facing the third negative electrode active material layer; and the blind hole is provided with the negative electrode active material of the third negative electrode active material layer.

10. The negative electrode plate according to claim 9, wherein a depth of the blind hole is 1%-80% of a sum of a thickness of the second negative electrode active material layer and a thickness of the first negative electrode active material layer, preferably 10%-70%, and more preferably 30%-60%; and/or
a diameter of the blind hole is 20-500 µm, preferably 100-150 µm; and/or
a spacing between the blind holes is 100-1500 µm, preferably 400-500 µm; and/or
a porosity of the blind hole is 0.1%-10%, preferably 2%-4%.

11. The negative electrode plate according to any one of claims 8 to 10, wherein the thickness of the first negative electrode active material layer is 10-100 µm, preferably 60-100 µm; and/or
the thickness of the second negative electrode active material layer is 10-200 µm, preferably 60-100 µm; and/or
a thickness of the third negative electrode active material layer is 10-100 µm, preferably 20-40 µm.

12. The negative electrode plate according to any one of claims 8 to 11, wherein the thickness of the second negative electrode active material layer is greater than the thickness of the first negative electrode active material layer; and/or the thickness of the second negative electrode active material layer is greater than the thickness of the third negative electrode active material layer.

13. The negative electrode plate according to any one of claims 1 to 12, wherein an orthographic projection of a bottom surface of the blind hole on a first plane is located within an orthographic projection of the opening of the blind hole on the first plane, and the first plane is perpendicular to a depth direction of the blind hole.

14. The negative electrode plate according to any one of claims 1 to 13, wherein a median particle size of artificial graphite in the negative electrode active material layer containing artificial graphite is 5-20 µm; and/or
a median particle size of natural graphite in the negative electrode active material layer containing natural graphite is 5-20 µm.

15. A battery, comprising the negative electrode plate according to any one of claims 1 to 14.

16. An electric apparatus, comprising the battery according to claim 15, wherein the battery is configured to supply electrical energy.
